# EUROPEAN PATENT APPLICATION

(11) **EP 2 402 680 A2**
(43) Date of publication of application: **04.01.2012**
(21) Application number: 11002158.1
(22) Date of filing: 16.03.2011
(51) Int. Cl.: F24J 3/08

(54) **The method for geothermal energy management and the apparatus for geothermal heat energy discharge**

(30) Priority: 18.03.2010 PL 39075310
(71) Applicant: CETEAM Sp. zo.o., 60-171 Poznan (PL); Biedermann, Jerzy, 60-175 Poznan (PL); Dorna, Kazimierz, 60-687 Poznan (PL)
(72) Inventor: The designation of the inventor has not yet been filed
(74) Representative: Passowicz, Marek

(57) **Abstract**

The method for geothermal energy management and the apparatus providing its realization enable the heat energy generated in the condensers of cooling installation and/or cooling energy generated in the evaporators of heat pump installation to be transferred using circulating pumps to the cooling medium located in a geothermal circuit of vertical or horizontal collectors fixed in a ground, or to the geothermal ring collectors working with a ground water.

## Description

The present invention relates to the method for geothermal energy management and the apparatus for geothermal heat energy discharge.

The rise of a refrigerant temperature in a compression refrigerators is the phenomenon occurring during medium compression.

The refrigerant may transfer heat energy to the environment if its temperature rises above environmental.

Most of conventional systems for transferring heat to environment are based on:
- use of air condensers refrigerating medium/atmospheric air, in which refrigerating medium directly rejects heat to environment,
- use of refrigerating/cooling medium condensers attached to fan cooling towers (in open and closed systems), in which refrigerating medium indirectly rejects heat to environment by cooling medium.

Conventional systems, which are based on areothermal condensers, have several weak points:
- variable conditions of work resulting from frequent change in atmospheric parameters (temperature, humidity) according to the time of a day and season of a year;
- overdimensioned installed capacity of cooling system compressors used for extreme environmental temperatures, which means maximal temperatures of condensation;
- overdimensioned surface area of heat exchange in a condensers;
- increased installed capacity in compressor propulsion;
- increased installed capacity of propulsion in cooling fans and cooling towers;
- low and variable coefficient of performance (COP) in cooling system;
- high energy consumption in cooling system

Conventional systems of cooling equipment use recovery of heat energy from the condensers for heating installation or for preparing domestic hot water. The weak point of such a solution is recovery of heat energy based on higher temperatures of condensation in cooling installation, which in turn results in disadvantageous low COP.

The present invention enables the heat energy generated in the condensers to be transferred using circulating pumps to the cooling medium located in a geothermal circuit of vertical or horizontal collectors fixed in a ground, or to the geothermal ring collectors working with a ground water.

The present invention also enables the heat energy generated in the condensers and cooling energy generated in the evaporators to be transferred using circulating pumps to the cooling-heating medium located in the common circuit of geothermal vertical or horizontal collectors fixed in a ground and to the common circuit of geothermal ring collectors working with a ground water.

It is advantageous if the upper source of cooling installation serves as a bottom source of heat pump installation at the same time.

Another aspect of the present invention is that at least one of cooling installation condensers is attached directly and/or through additional exchanger to the cooling circuit of vertical or horizontal collectors, which are fixed in a ground and are equipped with at least one circulating pump and system maintaining requested temperature of condensation in a cooling installation.

Additional aspect of the present invention is that at least one cooling installation condenser is attached directly and/or through additional exchanger to the cooling circuit of geothermal ring collector fixed in a ground. The ring collector is attached to the circulation of a force pump located in a extraction well. The force pump pumps water to the discharge well and ring collector contains at least one circulating pump and equipment, which includes: non-return valve, discharge valve directing water to discharge well and system maintaining requested temperature of condensation in a cooling installation.

It is advantageous if the cooling installation has parallel or serial connection with heat pump installation and at least one cooling installation condenser and one evaporator of heat pump installation are attached directly and/or through additional exchangers to the circulation of cooling-heating medium, which is found in a common geothermal collectors (horizontal and/or vertical) fixed in a ground. Moreover, at least one circulating pump, non-return valves and systems maintaining requested temperature of condensation in a cooling installation and/or temperature of evaporation in a heat pump installation are incorporated on side of cooling installation and on side of heat pump installation.

It is also advantageous if cooling installation has parallel or serial connection with heat pump installation and at least one cooling installation condenser and one evaporator of heat pump installation are attached directly and/or through additional exchangers to the circuit of cooling-heating medium in a common geothermal ring collector fixed in a ground and incorporated into force pump circuit found in an extraction well and pumps water to the discharge well. Moreover, at least one circulating pump, non-return valves and systems maintaining requested temperature of condensation in a cooling installation and/or temperature of evaporation in a heat pump installation are incorporated on side of cooling installation and on side of heat pump installation.

The present invention enables to obtain higher efficiency of COP compressors for heat pump installation and heat pump technology used in buildings equipped not only with cooling installation but also with integrated HVAC system and domestic hot water production supplied by heat pump technology.

Proposed method uses a natural capacity of a ground or ground water for interception of low-temperature heating and cooling loads using considerable thermal accumulation of a ground and its thermal properties.

The method and apparatus of the present invention consisting of appliances for geothermal heat transfer from cooling installation condensers, which are additionally equipped with circulating pumps and accessories including regulatory systems maintaining requested parameters of refrigerant heat condensation in the cooling installation and for refrigerant heat evaporation in the heat pump installation, is modem and ecologically active system for heat energy management.

The present invention is described with reference to the drawings illustrating sample installations:
FIG. 1 is a diagram illustrating the cooling installation connected to geothermal vertical collector
FIG. 2 is a diagram illustrating the cooling installation connected to geothermal horizontal collector
FIG. 3 is a diagram illustrating the cooling connected to geothermal ring collector
FIG. 4 is a diagram illustrating the cooling installation associated with heat pump installation and connected to geothermal horizontal collector
FIG.5 is a diagram illustrating the cooling installation associated with heat pump installation and connected to geothermal ring collector

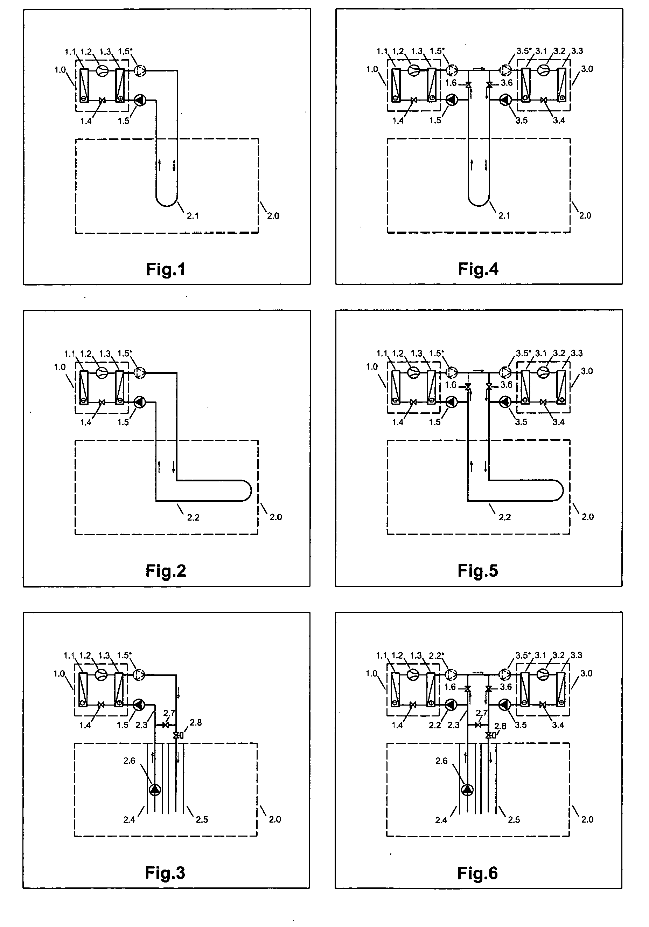

Referring to FIG.1 cooling installation 1.0 with evaporator 1.1, compressor 1.2, expansion valve 1.4, and condenser 1.3 is connected to geothermal vertical collector 2.1 fixed in a ground 2.0. Direct connection of condenser 1.3 with geothermal vertical collector 2.1 might be completed with additional exchanger with circulating pump and equipment maintaining constant temperature of condensation.

The refrigerant in the condenser 1.3 transfers heat to the cooling medium in a circuit of geothermal vertical collector 2.1 and then by circulating pump 1.5 or alternatively 1.5*, transfers heat to the ground 2.0.

Referring to FIG.2 cooling installation 1.0 with evaporator 1.1, compressor 1.2, expansion valve 1.4 and condenser 1.3 is connected to geothermal horizontal collector 2.2 fixed in a ground 2.0. Direct connection of condenser 1.3 with geothermal horizontal collector 2.2 might be completed with additional exchanger with circulating pump and equipment maintaining constant temperature of condensation.

The refrigerant in the condenser 1.3 transfers heat to the cooling medium in a circuit of geothermal horizontal collector 2.2 and then by circulating pump 1.5 or alternatively 1.5*, transfers heat to the ground 2.0.

Referring to FIG.3 cooling installation 1.0 with evaporator 1.1, compressor 1.2, expansion valve 1.4, and condenser 1.3 is connected to geothermal ring collector 2.3 fixed in a ground 2.0. Direct connection of condenser 1.3 with geothermal ring collector 2.3 might be completed with additional exchanger with circulating pump and equipment maintaining requested temperature of condensation.

The refrigerant in the condenser 1.3 transfers heat to the cooling medium in a circuit of geothermal ring collector 2.3 by circulating pump 1.5 or alternatively 1.5*.

The ring collector 2.3 cooperates with circulation of pump 2.6 located in the extraction well 2.4 and pumping water to the discharge well 2.5.

The ground water circulates in the ring collector 2.3 equipped particularly in a non-return valve 2.7 and in case of requested temperature change in the ring collector, the pump 2.6 is turned on and the valve 2.8 directing water to the discharge well 2.5 is opened.

Referring to FIG.4 cooling installation 1.0 with evaporator 1.1, compressor 1.2, expansion valve 1.4, and condenser 1.3 is directly connected to geothermal vertical collector 2.1 fixed in a ground 2.0, which is also connected to heat pump installation 3.0 with condenser 3.3, compressor 3.2, expansion valve 3.4 and evaporator 3.1.

Direct connection of condenser 1.3 and evaporator 3.1 with geothermal vertical collector 2.1 might be completed with additional exchangers with circulating pumps and equipment maintaining requested temperature of condensation in the cooling installation and maintaining requested temperature of evaporation in the heat pump installation.

The refrigerant of the condenser 1.3 transfers heat energy to the circuit of geothermal vertical collector 2.1 and then by circulating pump 1.5 or alternatively 1.5*, transfers heat to the ground 2.0.

The refrigerant in of the evaporator 3.1 transfers cooling energy to the circulation of geothermal vertical collector 2.1 and then by circulating pump 3.5 or alternatively 3.5*, transfers heat to the ground 2.0.

Non-return valves 1.6 and 3.6 enable the energy generated in a cooling installation 1.0 and heat pump installation 3.0, to be transferred simultaneously or independently to the geothermal vertical collector 2.1.

Referring to FIG.5 cooling installation 1.0 with evaporator 1.1, compressor 1.2, expansion valve 1.4, and condenser 1.3 is directly connected to geothermal horizontal collector 2.2 fixed in a ground 2.0, which is also connected to heat pump installation 3.0 with condenser 3.3, compressor 3.2, expansion valve 3.4 and evaporator 3.1.

Direct connection of condenser 1.3 and evaporator 3.1 with geothermal horizontal collector 2.2 might be completed with additional exchangers with circulating pumps and equipment maintaining requested temperature of condensation in the cooling installation and maintaining requested temperature of evaporation in the heat pump installation.

The refrigerant of the condenser 1.3 transfers heat energy to the circuit of geothermal horizontal collector 2.2 by circulating pump 1.5 or alternatively 1.5*, transfers heat to the ground 2.0.

The refrigerant in of the evaporator 3.1 transfers cooling energy to the circuit of geothermal horizontal collector 2.2 by circulating pump 3.5 or alternatively 3.5*, transfers heat to the ground 2.0.

Non-return valves 1.6 and 3.6 enable the energy generated in a cooling installation 1.0 and heat pump installation 3.0, to be transferred simultaneously or independently to the geothermal horizontal collector 2.2.

Referring to FIG.6 cooling installation 1.0 with evaporator 1.1, compressor 1.2, expansion valve 1.4, and condenser 1.3 is directly connected to geothermal ring collector 2.3 fixed in a ground 2.0 and additionally connected with heat pump installation 3.0, condenser 3.3, compressor 3.2, expansion valve 3.4 and evaporator 3.1.

Direct connection of condenser 1.3 and evaporator 3.1 with geothermal ring collector 2.3 might be completed with additional exchangers with circulating pumps and equipment maintaining requested temperature of condensation in a cooling installation and requested temperature of evaporation in a heat pump installation.

The refrigerant in the condenser 1.3 transfers heat energy to the circuit of geothermal ring collector 2.3 by circulating pump 1.5 or alternatively 1.5*.

The refrigerant in the evaporator 3.1 transfers cooling energy to the circuit of geothermal ring collector 2.3 by circulating pump 3.5 or alternatively 3.5*.

Non-return valves 1.6 and 3.6 enable the energy generated in a cooling installation 1.0 and heat pump installation 3.0, to be transferred simultaneously or independently to the geothermal ring collector 2.3.

The ring collector 2.3 cooperates with circuit of force pump 2.6 located in the extraction well 2.4 and pumping water to the discharge well 2.5.

The ground water circulates in the ring collector 2.3 equipped particularly in a non-return valve 2.7 and in case of requested temperature change in the ring collector 2.3, the pump 2.6 is turned on and the valve 2.8 directing water to the discharge well 2.5 is opened.

## Claims

1. A method for geothermal energy management comprising: transferring heat energy generated in condensers of cooling installation to the ground and/or to the ground water, **characterized in that** energy generated in condensers is transferred by circulating pump to the cooling medium in a circuit of geothermal vertical and/or horizontal collectors fixed in a ground or to the geothermal ring collectors cooperating with circulation of a ground water.

2. A method for geothermal energy management comprising: transferring heat energy generated in condensers of cooling installation and transferring cooling energy generated in evaporators of heat pump installation to the ground and/or to the ground water, **characterized in that** energy generated in condensers and evaporators is transferred by circulating pumps to the cooling-heating medium located in the common circuit of geothermal vertical and/or horizontal collectors fixed in a ground, or to the common circuit of ring collectors cooperating with circulation of a ground water.

3. The method according to claim 2, **characterized in that** the upper source of cooling installation serves as a bottom source of heat pump installation at the same time.

4. The apparatus for geothermal transfer of heat energy, **characterized in that** at least one condenser (1.3) of cooling installation (1.0) is connected directly and/or through additional exchanger to the cooling circuit of geothermal vertical (2.1) and/or horizontal (2.2) collector fixed in a ground (2.0), which is equipped in at least one circulating pump (1.5) or (1.5*) and system maintaining requested temperature of condensation in a cooling installation.

5. The apparatus for geothermal transfer of heat energy, **characterized in that** at least one condenser (1.3) of cooling installation (1.0) is connected directly and/or through additional exchanger to the cooling circuit of geothermal ring collector (2.3) fixed in a ground (2.0) and connected to the circuit of force pump (2.6) located in a extraction well (2.4), moreover the ring collector (2.3) is equipped in at least one circulating pump (1.5) or (1.5*) and equipment comprising particularly in a non-return valve (2.7) and discharge valve (2.8) directing water to discharge well (2.5) and system maintaining requested temperature of condensation in a cooling installation.

6. The apparatus according to claim 4, **characterized in that** it has parallel or serial connection with heat pump installation (3.0), and at least one condenser (1.3) of cooling installation (1.0) and one evaporator (3.1) of heat pump installation (3.0) are connected directly and/or through additional exchangers to the circuit of cooling-heating medium located in a common geothermal vertical (2.1) and/or horizontal (2.2) collectors fixed in a ground (2.0), moreover, at least one circulating pump (1.5) or (1.5*), and respectively (3.5) or (3.5*), non-return valves (1.6) and (3.6) and systems maintaining requested temperature of condensation in a cooling installation (1.0) and/or temperature of evaporation in a heat pump installation (1.0) are incorporated on side of cooling installation (1.0) and on side of heat pump installation (3.0).

7. The apparatus according to claim 5, **characterized in that** it has parallel or serial connection with heat pump installation (3.0), and at least one condenser (1.3) of cooling installation (1.0) and one evaporator (3.1) of heat pump installation (3.0) are connected directly and/or through additional exchangers to the circuit of cooling-heating medium located in a common geothermal ring collector (2.3) fixed in a ground (2.0) and connected to the circuit of force pump (2.6) located in a extraction well (2.4), moreover, at least one circulating pump (1.5) or (1.5*), and respectively (3.5) or (3.5*), non-return valves (1.6) and (3.6) and systems maintaining requested temperature of condensation in a cooling installation (1.0) and/or temperature of evaporation in a heat pump installation (1.0) are incorporated on side of cooling installation (1.0) and on side of heat pump installation (3.0).
